# EUROPÄISCHE PATENTSCHRIFT

(11) **EP 1 369 328 B1**
(45) Veröffentlichungstag und Bekanntmachung des Hinweises auf die Patenterteilung: **09.02.2005**
(21) Anmeldenummer: 03009452.8
(22) Anmeldetag: 25.04.2003
(51) Int. Cl.: B60T 15/04

(54) **Betätigungsvorrichtung für ein Bremsgerät**
Device for operating a braking apparatus
Dispositif d'actionnement d'un dispositif de freinage

(30) Priorität: 05.06.2002 DE 10224806
(43) Veröffentlichungstag der Anmeldung: 10.12.2003
(73) Patentinhaber: WABCO GmbH & CO. OHG, 30432 Hannover (DE)
(72) Erfinder: Christoffers, Bernd, 30974 Wennigsen (DE); Leske, Olaf, 30851 Langenhagen (DE)
(74) Vertreter: Schrödter, Manfred

(56) Entgegenhaltungen:
- US-A- 5 365 791
- US-A- 5 544 948
- US-A- 5 704 693
- US-A- 5 831 232
- US-A- 6 053 205
- US-A- 6 158 468
- US-B1- 6 192 685

## Beschreibung

Die Erfindung betrifft eine Betätigungsvorrichtung für ein Bremsgerät gemäß Oberbegriff des Anspruchs 1.

Moderne elektronische Bremssysteme (EBS-Systeme) für Fahrzeuge weisen einen einkreisigen, rein pneumatisch arbeitenden und einen elektro-pneumatischen Kreis auf. Der elektro-pneumatische Teil umfasst u. a. ein zentrales elektronisches Steuergerät und einen Bremswertgeber mit integriertem als Wegsensor ausgebildeten Sollwert-Sensor, Bremsschalter und Proportional-Relaisventil. Der Bremswertgeber ist mechanisch mit einem Bremspedal und elektrisch mit dem elektronischen Steuergerät verbunden und umfasst einen mechanisch mit dem Bremspedal verbundenen Stößel, welcher axial innerhalb eines ortsfest angeordneten Gehäuses verschiebbar angeordnet ist. Der Stößel betätigt einen Kolben über ein einen Leerhub realisierendes Bauteil und eine Feder, die sich am Kolben und an diesem Bauteil abstützt. Der Leerhub von ca. 2 mm ist vorgesehen, damit der Fahrer beim Betätigen etwas Spiel hat und nicht gleich die Bremse betätigt. Zur Übermittlung der Stößelbewegung an das elektronische Steuergerät dient der Wegsensor, welcher ein fest im Gehäuse angeordnetes Teil und einen mit dem Stößel in axialer Richtung bewegbaren Schieber aufweist, der in eine Aufnahme des Stößels eingreift. Probleme bereiten die reibungsarme Führung des Stößels und des den Leerhub realisierenden Bauteils. Durch die Bremspedalbetätigung wird nicht nur eine Kraft in axialer Richtung sondern auch ein Drehmoment auf den Stößel übertragen, das eine Verdrehung des Stößels um seine Längsachse bewirkt, insbesondere wenn die mechanische Verbindung mit dem Bremspedal über ein Kugelgelenk erfolgt. Hierdurch besteht die Gefahr, dass der Schieber des Wegsensors aus seiner Aufnahme im Stößel herausrutscht oder beschädigt wird und somit eine Wegsensierung nicht oder nur fehlerhaft möglich ist.

Die Aufgabe der vorliegenden Erfindung besteht deshalb darin, ein Betätigungsvorrichtung der eingangs genannten Art so auszubilden, dass mit einfachen Mitteln die bewegten Teile einwandfrei reibungsarm geführt werden und ein auf den Stößel wirkendes Drehmoment kompensiert wird.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung schafft einen einzigen, auf den Stößel aufspannbaren Führungsring, der in Zusammenwirken mit zugeordneten Ausbildungen am Stößel und dem als Distanzring ausgebildeten Bauteil zur Realisierung eines Leerhubes den Stößel außen im Gehäuse und den Distanzring innen im Stößel axial führt und gleichzeitig die Gefahr einer Verdrehung des Stößels um seine Längsachse beseitigt und eine einwandfreie Anlenkung des Wegsensor-Schiebers an den Stößel gewährleistet. Sämtliche gewünschten Funktionen werden durch die Erfindung mit nur einem einzigen Bauteil realisiert, was die Kosten und den Aufwand für die Herstellung und die Montage verringert und die Toleranzketten verkleinert. Der Aufbau des Stößels kann vereinfacht werden.

Die Erfindung soll nachfolgend anhand der beigefügten Zeichnung, in der ein Ausführungsbeispiel dargestellt ist, näher erläutert werden.

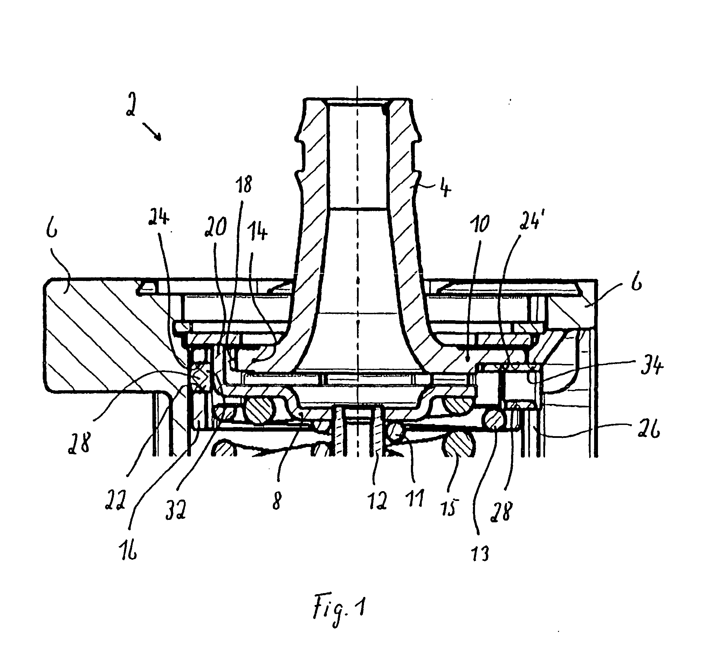

Es zeigt
- Fig. 1: einen ersten Schnitt durch einen Teil einer erfindungsgemäßen Betätigungsvorrichtung für ein Bremsgerät,

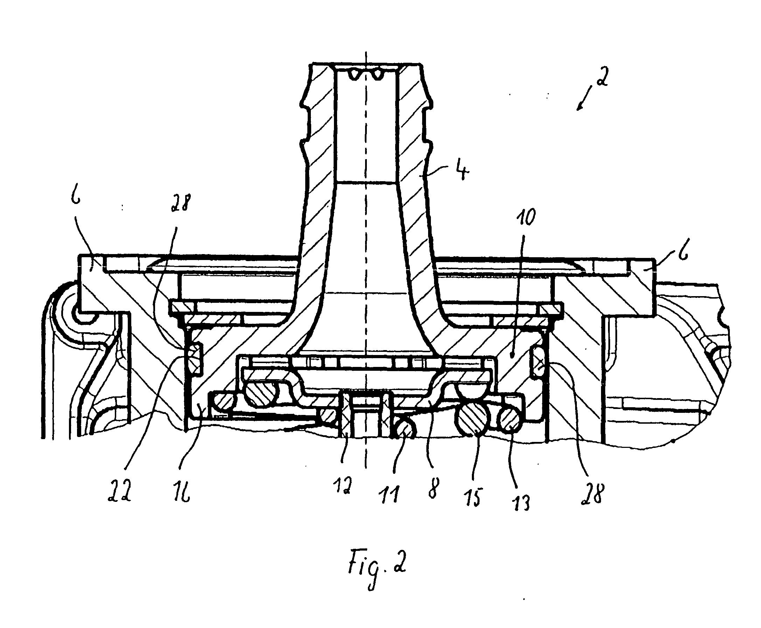

- Fig. 2: einen zweiten Schnitt durch das Teil nach Fig. 1,
- Fig. 3: einen gedrehten Schnitt (3D-Ansicht) des Teils nach den Fig. 1 und 2 und

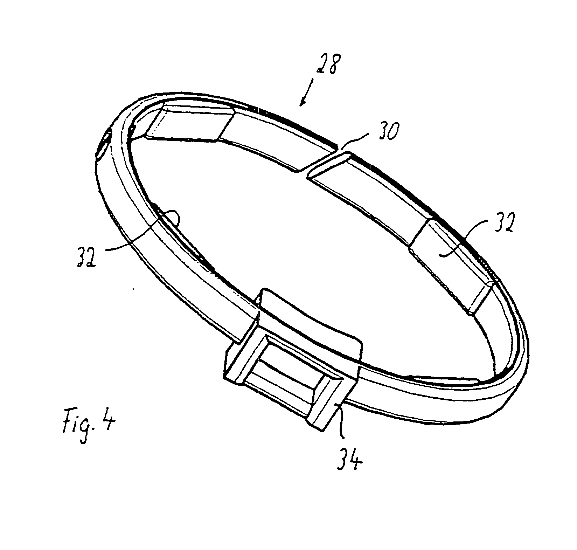

- Fig. 4: einen bei der Betätigungsvorrichtung verwendeten erfindungsgemäßen Führungsring.

Gleiche und einander entsprechende Bauteile sind in den Figuren der Zeichnung mit den gleichen Bezugszeichen versehen.

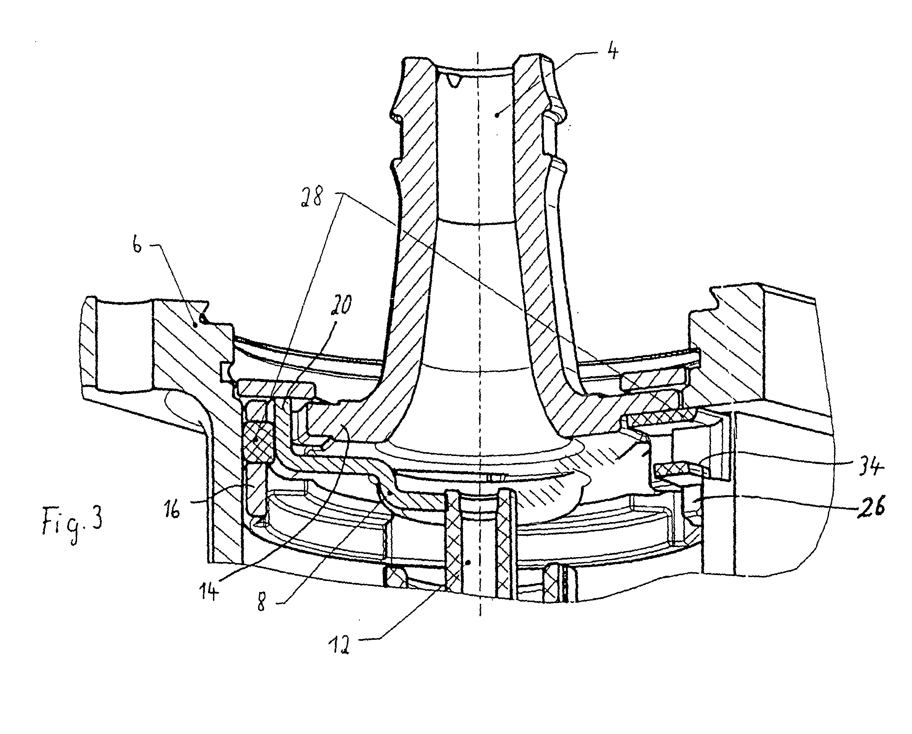

Die Zeichnung zeigt einen Teil einer Betätigungsvorrichtung für ein Bremsgerät 2 mit einem Stößel 4, welcher in einem Gehäuse 6 axial verschiebbar ist und von einem Bremspedal über eine mechanische Verbindung betätigbar ist (nicht dargestellt), mit einem Distanzring 8, welcher in einem verbreiterten zylindrischen Ansatz 10 des Stößels 4 axial verschiebbar ist, und mit einem vom Stößel über den Distanzring 8 und eine Abstufungsfeder 11 axial bewegbaren Kolben 12. Die Abstufungsfeder 11 stützt sich am Kolben 12 und am Distanzring 8 ab. Das Bezugszeichen 13 bezeichnet eine äußere Rückstellfeder, die sich am Stößel 4 und einem gehäusefesten Anschlag (nicht dargestellt) abstützt. Das Bezugszeichen 15 bezeichnet eine Feelingfeder, die sich am Distanzring 8 und einem gehäusefesten Anschlag (nicht dargestellt) abstützt. Die Federn 11, 13 und 15 sind in der Fig. 3 nicht eingezeichnet.

Der zylindrische Ansatz 10 des Stößels 4 weist einen ringförmigen Zylinderboden 14 und einen Zylindermantel 16 auf. Im Zylinderboden 14 sind mehrere beabstandete Langlöcher 18 ausgebildet. Der Distanzring 8 weist mehrere in der Zeichnung nach oben zeigende Laschen 20 auf, die den Langlöchern 18 zugeordnet sind und in diese hineinragen.

Der Zylindermantel 16 weist auf seinem Außenumfang eine radial umlaufende Nut 22 auf. Im Boden der Nut 22 sind in Höhe der Langlöcher 18 Öffnungen 24 ausgebildet, von denen eine Öffnung 24' mit einem Führungsschlitz 26 ausgerichtet ist, der im Gehäuse 6 ausgebildet ist und der Aufnahme und Führung eines Wegsensorschiebers (nicht dargestellt) dient. Die Öffnung 24' ist vorzugsweise größer ausgebildet als die weiteren Öffnungen 24.

In die Nut 22 ist ein Führungsring 28, der vorzugsweise aus Kunststoff besteht, nach Art eines Kolbenringes eingelegt. Der Führungsring 28 weist eine Trennstelle 30 auf, die es ermöglicht, den Führungsring zur Montage am Stößel 4 aufzuweiten und über den Zylindermantel 16 zu schieben. Aufgrund der Federwirkung rastet der Führungsring 28 bei Erreichen der Montageposition selbsttätig in die Nut 22 ein.

Der Führungsring 28 weist auf seinem Innenumfang den Öffnungen 24 im Nutboden zugeordnete quaderförmige Verdikkungen 32 auf, die in die Öffnungen 24 hineinragen. Der Außenumfang des Führungsringes 28 weist an einer Stelle ein nach außen vorstehendes Fenster 34 auf, das der Öffnung 24 zugeordnet ist und im montierten Zustand des Führungsringes 28 durch die Öffnung 24' hindurch in den Führungsschlitz 26 des Gehäuses 6 ragt und das Ende des Wegsensor-Schiebers (nicht dargestellt) aufnimmt.

Die Stärke des Führungsringes 28 in radialer Richtung zwischen den Verdickungen 32 ist etwas größer als die Tiefe der Nut 22 des Stößels. Die Stärke des Führungsringes 28 im Bereich der Verdickung 32 ist größer als die Wandstärke des Zylindermantels 16 des Stößels 4, derart, dass die Verdikkung durch die Öffnung 24 hindurch geringfügig in den Innenraum des Zylindermantels 16 ragt.

Durch die beschriebene Ausbildung des Führungsringes 28, des Stößels 4 und des Distanzringes 8 ist zum einen sicher gestellt, dass der Führungsring 28 den Stößel im Bereich des Zylindermantels 16 außen gegenüber dem Gehäuse 6 und den Distanzring 8 im Bereich seiner Lasche 20 mit den Laschenaußenseiten im Inneren des Zylindermantels 16 des Stößels 4 führt. Das Fenster 34 sichert den Stößel 4 gegen Verdrehen und sorgt dadurch für eine störungsfreie Anlenkung des Wegsensor-Schiebers an den Stößel.

Der Stößel und das Gehäuse bestehen vorzugsweise aus Aluminiumguss, während der Distanzring vorzugsweise aus Stahl besteht.

## Patentansprüche

1. Betätigungsvorrichtung für ein Bremsgerät mit
- einem Stößel, der axial verschiebbar in einem Gehäuse des Bremsgerätes angeordnet ist und mechanisch mit einem Bremspedal verbunden ist,
- einem vom Stößel betätigbaren Kolben zur Ansteuerung eines Bremsventils,
- einem einen geringen Leerhub realisierenden, vom Stößel beaufschlagbaren Bauteil und
- einem mit dem Stößel und durch den Stößel bewegbaren Wegsensor-Schieber zur Erfassung der Axialbewegung des Stößels,
**gekennzeichnet durch** folgende Merkmale:
- der Stößel (4) weist in Axialrichtung einen verbreiterten zylindrischen Ansatz (10) mit einem Zylinderboden (14) und einem Zylindermantel (16) auf,
- im Zylinderboden (14) sind mehrere Langlöcher (18) mit Abstand zueinander kreisförmig angeordnet,
- der Zylindermantel (16) weist auf seinem Außenumfang eine radial umlaufende Nut (22) auf,
- im Boden der Nut (22) des Zylindermantels (16) sind Öffnungen (24, 24') in Höhe der Langlöcher (18) ausgebildet,
- das den Leerhub realisierende Bauteil ist ein Distanzring (8), welcher innerhalb des zylindrischen Ansatzes (10) des Stößels (4) zwischen diesem und dem Kolben (12) angeordnet ist,
- der Distanzring (8) weist an seinem Umfang mehrere den Langlöchern (18) zugeordnete, in die Langlöcher ragende senkrecht abstehende Laschen (20) auf,
- in der Nut (22) des Stößels (4) ist ein Führungsring (28) angeordnet,
- der Führungsring (28) weist auf seinem Innenumfang den Öffnungen (24, 24') zugeordnete, in die Öffnungen ragende Verdickungen (32) auf,
- der Führungsring (28) weist auf seinem Außenumfang an einer Stelle ein radial nach außen vorstehendes Fenster (34) zur Aufnahme des Wegsensor-Schiebers auf,
- das Fenster (34) ragt **durch** eine der Öffnungen (24') im Nutboden hindurch und in einen im Gehäuse (6) ausgebildeten Führungsschlitz (26) für den Wegsensor-Schieber hinein, dessen Ende vom Fenster aufgenommen ist und der Stößelbewegung folgt.

2. Betätigungsvorrichtung nach Anspruch 1, **dadurch gekennzeichnet, dass** die Stärke des Führungsringes (28) in radialer Richtung zwischen den Verdickungen (32) etwas größer ist als die Tiefe der Nut (22) des Stößels (4).

3. Betätigungsvorrichtung nach Anspruch 1, **dadurch gekennzeichnet, dass** die Stärke des Führungsringes (28) im Bereich der Verdickungen (32) größer ist als die Wandstärke des Zylindermantels (16) des Stößels (4), derart, dass die Verdickung durch die Öffnung (24) hindurch geringfügig in den Innenraum des Zylindermantels (16) ragt.

4. Betätigungsvorrichtung nach einem der Ansprüche 1-3, **dadurch gekennzeichnet, dass** der Führungsring (28) elastisch auf den Zylindermantel (16) des Stößels (4) aufspannbar ist.

5. Betätigungsvorrichtung nach einem der vorhergehenden Ansprüche, **dadurch gekennzeichnet, dass** der Führungsring (28) eine Trennstelle (30) aufweist.

6. Betätigungsvorrichtung nach einem der vorhergehenden Ansprüche, **dadurch gekennzeichnet, dass** der Führungsring (28) aus Kunststoff besteht.

## Claims

1. Operating device for a brake apparatus, having
- a plunger that is axially displaceable in a housing of the brake apparatus and is mechanically connected to a brake pedal,
- a piston operable by the plunger for control of a brake valve,
- a component performing a slight idle stroke action, on which component the plunger is capable of acting, and
- a displacement sensor slider movable with the plunger and by the plunger for detecting the axial movement of the plunger,
**characterised by** the following features:
- the plunger (4) comprises in the axial direction a broadened cylindrical extension (10) having a cylindrical base (14) and a cylindrical casing (16),
- a plurality of slots (18) are arranged in a circle at intervals from one another in the cylinder casing (16),
- the cylinder casing (16) has a radially extending groove (22) on its outer circumference,
- in the base of the groove (22) of the cylindrical casing (16), openings (24, 24') are formed at the level of the slots (18),
- the component performing the idle stroke action is a spacer ring (8), which is arranged inside the cylindrical extension (10 ) of the plunger (4) between this and the piston (12) ,
- the spacer ring (8) has at its circumference a plurality of vertically projecting lugs (20) associated with the slots (18) and projecting into the slots,
- a guide ring (28) is arranged in the groove (22) of the plunger (4),
- on its inner circumference the guide ring (28) has thickened portions (32) associated with the openings (24, 24') and projecting into the openings (24, 24'),
- the guide ring (28) has on its outer circumference at one point a radially outwardly protruding window (34) for receiving the displacement sensor slider,
- the window (34) projects right through one of the openings (24') in the groove base and into a guide slot (26), formed in the housing (6), for the displacement sensor slider, the end of which is received by the window and follows the plunger movement.

2. Operating device according to claim 1, **characterised in that** the thickness of the guide ring (28) in the radial direction between the thickened portions (32) is somewhat greater than the depth of the groove (22) of the plunger (4).

3. Operating device according to claim 1, **characterised in that** the thickness of the guide ring (28) in the region of the thickened portions (32) is greater than the wall thickness of the cylindrical casing (16) of the plunger (4), so that the thickened portion projects through the opening (24) slightly into the inner space of the cylindrical casing (16).

4. Operating device according to any one of claims 1 to 3, **characterised in that** the guide ring (28) is resiliently clampable on the cylindrical casing (16) of the plunger (4).

5. Operating device according to any one of the preceding claims, **characterised in that** the guide ring (28) has a discontinuity (30).

6. Operating device according any one of the preceding claims, **characterised in that** the guide ring (28) comprises plastics material.

## Revendications

1. Dispositif d'actionnement destiné à un appareil de freinage, comprenant
- un poussoir qui est disposé de manière axialement coulissante dans un carter de l'appareil de freinage, et est relié mécaniquement à une pédale de frein,
- un piston pouvant être actionné par le poussoir et destiné à commander une vanne de freinage,
- une pièce pouvant être sollicitée par le poussoir et réalisant une faible course à vide, et
- un coulisseau de capteur de déplacement mobile avec le poussoir et par le poussoir, destiné à relever le mouvement axial du poussoir,
**caractérisé par** les particularités suivantes :
- le poussoir (4) présente dans la direction axiale, une embase cylindrique (10) élargie comprenant un fond de cylindre (14) et une enveloppe de cylindre (16),
- dans le fond de cylindre (14) sont disposés de manière circulaire, à distance les uns des autres, plusieurs trous oblongs (18),
- l'enveloppe de cylindre (16) comporte sur sa périphérie extérieure, une rainure radiale périphérique (22),
- dans le fond de la rainure (22) de l'enveloppe de cylindre (16) sont formées des ouvertures (24, 24'), au niveau des trous oblongs (18),
- la pièce réalisant la course à vide est un anneau entretoise (8) qui est disposé à l'intérieur de l'embase cylindrique (10) du poussoir (4), entre celui-ci et le piston (12),
- l'anneau entretoise (8) comporte sur sa périphérie, plusieurs languettes (20) en saillie perpendiculaire, associées aux trous oblongs (18) et s'engageant dans les trous oblongs,
- dans la rainure (22) du poussoir (4) est disposé un anneau de guidage (28),
- l'anneau de guidage (28) présente sur sa périphérie intérieure, des renflements (32) associés aux ouvertures (24, 24') et s'engageant dans les ouvertures,
- l'anneau de guidage (28) présente sur sa périphérie extérieure, en un endroit, une fenêtre (34) en saillie radiale vers l'extérieur et destinée à recevoir le coulisseau de capteur de déplacement,
- la fenêtre (34) fait saillie à travers l'une des ouvertures (24') dans le fond de rainure et s'engage dans une fente de guidage (26) formée dans le carter (6) et destinée au coulisseau de capteur de déplacement dont l'extrémité est reçue par la fenêtre et suit le mouvement du poussoir.

2. Dispositif d'actionnement selon la revendication 1, **caractérisé en ce que** l'épaisseur de l'anneau de guidage (28) dans la direction radiale, entre les renflements (32), est légèrement supérieure à la profondeur de la rainure (22) du poussoir (4).

3. Dispositif d'actionnement selon la revendication 1, **caractérisé en ce que** l'épaisseur de l'anneau de guidage (28) dans la zone des renflements (32), est supérieure à l'épaisseur de paroi de l'enveloppe de cylindre (16) du poussoir (4), de façon telle que le renflement, à travers l'ouverture (24), s'engage légèrement dans l'espace intérieur de l'enveloppe de cylindre (16).

4. Dispositif d'actionnement selon l'une des revendications 1 à 3, **caractérisé en ce que** l'anneau de guidage (28) peut être serré de manière élastique sur l'enveloppe de cylindre (16) du poussoir (4).

5. Dispositif d'actionnement selon l'une des revendications précédentes, **caractérisé en ce que** l'anneau de guidage (28) présente une zone de sectionnement (30).

6. Dispositif d'actionnement selon l'une des revendications précédentes, **caractérisé en ce que** l'anneau de guidage (28) est réalisé en matière plastique.
